# EUROPÄISCHE PATENTSCHRIFT

(11) **EP 2 872 943 B1**
(45) Veröffentlichungstag und Bekanntmachung des Hinweises auf die Patenterteilung: **02.10.2019**
(21) Anmeldenummer: 12790800.2
(22) Anmeldetag: 18.10.2012
(51) Int. Cl.: G02B 27/01, G06F 1/12

(54) **VORRICHTUNG ZUM BETREIBEN MEHRERER OPTISCHER ANZEIGEVORRICHTUNGEN EINES FAHRZEUGS**
DEVICE FOR OPERATING MULTIPLE OPTICAL DISPLAY DEVICES OF A VEHICLE
DISPOSITIF DE FONCTIONNEMENT DE PLUSIEURS DISPOSITIFS D'AFFICHAGE OPTIQUE D'UN VÉHICULE

(30) Priorität: 10.07.2012 DE 102012212015
(43) Veröffentlichungstag der Anmeldung: 20.05.2015
(73) Patentinhaber: Bayerische Motoren Werke Aktiengesellschaft, 80809 München (DE)
(72) Erfinder: SCHWAB, Axel, 80538 München (DE); RIEGER, Wolfgang, 82194 Groebenzell (DE)
(86) Internationale Anmeldenummer: PCT/EP2012/070618
(87) Internationale Veröffentlichungsnummer: WO 2014/008958

(56) Entgegenhaltungen:
- EP-A1- 0 643 315
- EP-A1- 1 916 645
- EP-A1- 1 916 645
- WO-A1-2012/035134
- WO-A2-2008/078187
- DE-A1-102010 003 850
- US-A1- 2012 146 809
- US-A1- 2012 146 809
- US-A1- 2012 174 004

## Beschreibung

Die Erfindung betrifft eine Vorrichtung zum Betreiben einer oder mehrerer optischer Anzeigevorrichtungen eines Fahrzeugs sowie ein Anzeigesystem für das Fahrzeug.

Heutige Kraftfahrzeuge weisen verschiedene Steuergeräte auf, die ausgebildet sind, verschiedene Fahrzeugfunktionen auszuführen. Funktionen zur Fahrerinformation werden beispielsweise von einem Kombi-Instrument ausgeführt. Funktionen zur Navigation werden von einem anderen Steuergerät ausgeführt, beispielsweise in einer Head-Unit. Anzeigen zur Navigation und zu den Fahrerinformationen erfolgen überwiegend mittels unterschiedlicher optischer Anzeigeeinrichtungen, die den Steuergeräten direkt zugeordnet sind. Beispielsweise werden die Fahrerinformationen mittels einer Kombi-Instrumententafel und die Navigationsinformationen mittels einem zentralen Fahrzeugdisplay angezeigt.

Die WO 2008/078187 A2 befasst sich mit einem Verfahren zur Verbesserung der Erkennung von Objekten, insbesondere Fußgängern, in der Nacht und einem entsprechenden Nachtsichtgerät für ein Fahrzeug. Das Nachtsichtgerät umfasst dabei einen Infrarotscheinwerfer, eine Infrarotkamera und eine Verarbeitungseinheit. Die Verarbeitungseinheit ist einerseits dazu eingerichtet anhand erster von der Infrarotkamera gelieferter Bilder eine Personenerkennung durchzuführen und zweitens die Stelle, an welcher eine Person erkannt wurde, in zweiten, von der Infrarotkamera gelieferten Bildern mit einem Rahmen zu markieren.

DE 10 2010 003850 A1 offenbart ein Verfahren zur Nachführung einer Position einer Objektmarkierung zum Markieren eines Objekts auf einer Anzeigeeinrichtung vorgeschlagen, wobei die Position der Objektmarkierung basierend auf einer Umfeldinformation ermittelt wird, die eine von einer Umfelderfassungseinrichtung bereitgestellte Information über ein sich im Sichtbereich der Umfelderfassungseinrichtung befindliches Objekt repräsentiert, das einen Schritt des Bestimmens einer Nachführinformation zum Nachführen der Position der Objektmarkierung auf der Anzeigeeinrichtung basierend auf einer Bewegung des Fahrzeugs umfasst, wobei die Bewegung eine Lageveränderung des Objekts in Bezug auf die Umfelderfassungseinrichtung bewirkt.

Die Aufgabe, die der Erfindung zu Grunde liegt, ist es, eine Vorrichtung zum Betreiben zumindest einer optischen Anzeigevorrichtung sowie ein Anzeigesystem für ein Fahrzeug zu schaffen, die eine effiziente und zuverlässige optische Signalisierung von Informationen im Fahrzeug ermöglichen.

Die Aufgabe wird gelöst durch die Merkmale des unabhängigen Patentanspruchs. Vorteilhafte Weiterbildungen der Erfindung sind in den Unteransprüchen gekennzeichnet.

Die Erfindung zeichnet sich gemäß einem ersten Aspekt aus durch eine Vorrichtung zum Betreiben mehrerer optischer Anzeigevorrichtungen eines Fahrzeugs. Die Vorrichtung ist ausgebildet, abhängig von bereitgestellten Datensätzen und abhängig von einer vorgegebenen Latenzzeit ein dreidimensionales Modell für eine vorgegebene Umgebung des Fahrzeugs zu ermitteln, wobei die Datensätze vorgegebene Fahrzeuginformationen und/oder Fahrinformationen repräsentieren, die geeignet sind, einem Fahrzeugnutzer grafisch und/oder bildhaft signalisiert zu werden. Ferner ist die Vorrichtung ausgebildet, Bildpunktwerte für zumindest einen Teil von Bildpunkten eines digitalen Bildes und/oder eines grafischen Elements zu ermitteln abhängig von dem dreidimensionalen Modell und ein Signalisierungssignal zu ermitteln zum Signalisieren der Bildpunktwerte der Bildpunkte mittels der jeweiligen optischen Anzeigevorrichtung, wobei die vorgegebene Latenzzeit eine Bereitstellungszeit oder einen Teil der Bereitstellungszeitdauer repräsentiert, die eine zeitliche Dauer umfasst, von einem Beginn eines Erfassens der Fahrzeuginformationen und/oder Fahrinformationen bis zur Signalisierung des Signalisierungssignals mittels der jeweiligen optischen Anzeigevorrichtung. Die Vorrichtung ist ferner ausgebildet, das dreidimensionale Modell und/oder die Bildpunktwerte und/oder das Signalisierungssignal abhängig von einer jeweiligen Ausbildung der optischen Anzeigevorrichtung zu ermitteln. Des Weiteren ist die Vorrichtung ausgebildet abhängig von einer aktuellen Anzeigesituation einer ersten optischen Anzeigevorrichtung der mehreren Anzeigevorrichtungen auszuwählen, das dreidimensionale Modell und/oder die Bildpunktwerte und/oder das Signalisierungssignal zu ermitteln für die erste optische Anzeigevorrichtung oder für eine zweite optische Anzeigevorrichtung der mehreren Anzeigevorrichtungen, und das dreidimensionale Modell und/oder die Bild
punktwerte und/oder das Signalisierungssignal entsprechend zu ermitteln. Alternativ oder zusätzlich ist der jeweiligen Fahrinformation und/oder Fahrzeuginformation eine vorgegebene Priorität zugeordnet und die Vorrichtung ist ausgebildet, abhängig von der Priorität eine Signalisierung der jeweiligen Fahrinformation und/oder Fahrzeuginformation zu priorisieren zwischen der ersten optischen Anzeigevorrichtung und der zweiten optischen Anzeigevorrichtung und das dreidimensionale Modell und/oder die Bildpunktwerte und/oder das Signalisierungssignal entsprechend zu ermitteln für die erste optische Anzeigevorrichtung oder für die zweite optische Anzeigevorrichtung.

Vorteilhafterweise ermöglicht dies, kontaktanaloge Anzeigen, insbesondere in einem Head-up-Display, mit einer hohen Zuverlässigkeit und in Echtzeit zu generieren. Die Ermittlung des dreidimensionale Modells und/oder der Bildpunktwerte und/oder des Signalisierungssignals abhängig von einer jeweiligen Ausbildung der optischen Anzeigevorrichtung ermöglicht vorteilhafterweise, aufwendige dreidimensionale Darstellungen mittels der jeweiligen optischen Anzeigevorrichtung zuverlässig und mit hoher Qualität anzuzeigen. Falls die aktuelle Anzeigesituation der ersten optischen Anzeigevorrichtung die gewünschte Anzeige nicht zulässt, kann die Information in geeigneter Weise mittels der zweiten optischen Anzeigevorrichtung signalisiert werden. Solch ein Fall kann zum Beispiel eintreten, wenn eine kontaktanaloge Darstellung bestimmter Informationen im Head-up-Display aufgrund einer zur großen Anzahl von Anzeigeelementen in einem Anzeigefeld des Head-up-Displays nicht zugelassen wird. In diesem Fall können die Informationen von der zweiten optischen Anzeigevorrichtung signalisiert werden.

Dadurch, dass die Bildgenerierung, insbesondere die Bildsynthese, zentral in der Vorrichtung ausgeführt werden können, können Verzögerungszeiten und Bereitstellungslatenzzeiten einfach berücksichtigt werden. Die Verzögerungszeiten können hierbei eine Zeitdauer repräsentieren, bis die ermittelten Bilddaten zu den Anzeigensenken gelangen. Die Bereitstellungslatenzzeiten können hierbei jeweils eine Zeitdauer repräsentieren, die jeweils erforderlich ist für ein Bereitstellen verschiedener

Daten aus unterschiedlichen Einheiten, die für die jeweilige Bildgenerierung genutzt werden. Für eine geeignete Bildgenerierung kann zum Beispiel die Nutzung von Daten aus einem Fahrerassistenzsystem und/oder von einer fahrzeugexternen Einrichtung und/oder Daten aus einer Navigationseinrichtung erforderlich sein. Die zentrale Bildgenerierung ermöglicht, dass aufwendige dreidimensionale Darstellungen schlüssig und hochwertig in der einen oder den mehreren optischen Anzeigvorrichtungen, insbesondere in dem Head-up-Display und/oder in einem Kombi-Instrument, angezeigt werden können.

In einer vorteilhaften Ausgestaltung des ersten Aspekts ist die Vorrichtung signaltechnisch koppelbar mit einem vorgegebenen Fahrzeugkommunikationsnetzwerk und ausgebildet, die Datensätze über das Fahrzeugkommunikationsnetzwerk zu empfangen. Dies hat den Vorteil, dass die Vorrichtung als eigenständige Einheit ausgebildet sein kann, die insbesondere zum Betreiben eines Head-up-Displays genutzt werden kann.

In einer weiteren vorteilhaften Ausgestaltung des ersten Aspekts weisen die Datensätze eine vorgegebene Metadatenstruktur auf, die geeignet ist, die Fahrzeuginformationen und/oder Fahrinformationen textuell zu charakterisieren. Dies hat den Vorteil, dass Informationen, insbesondere die Fahrinformationen und/oder Fahrzeuginformationen, für die üblicherweise ein Signalisierungssignal generiert und bereitgestellt wird, das die Information grafisch und/oder bildhaft charakterisiert, umgesetzt werden können in die Datensätze mit der Metadatenstruktur. Die Datensätze können effizient übertragen werden und dann in der Vorrichtung genutzt werden für eine Bildgenerierung. Eine Übertragungsbandbreite kann im Vergleich zu einer Übertragung der Fahrinformation und/oder Fahrzeuginformation in Form von Zeichenbefehlen reduziert werden. Dies kann einen Beitrag leisten dazu, dass trotz einer begrenzten Übertragungsbandbreite eine Anzeige der Fahrinformation und/oder Fahrzeuginformation qualitativ hochwertig erfolgen kann. Ferner ermöglicht die Metadatenstruktur der Datensätze, dass das dreidimensionale Modell einfacher und/oder zuverlässiger und/oder präziser ermittelt werden kann. Die Metadatenstruktur der Datensätze kann einen Beitrag dazu leisten, dass logische Verknüpfungen präziser beschrieben werden können.

In einer weiteren vorteilhaften Ausgestaltung des ersten Aspekts wird die Priorität der jeweiligen Fahrinformation und/oder Fahrzeuginformation abhängig von einer aktuell ermittelten Verkehrssituation und/oder Fahrsituation des Fahrzeugs ermittelt. Vorteilhafterweise ermöglicht dies, die Anzeigenpriorisierung dynamisch anzupassen an die aktuelle Verkehrssituation und/oder Fahrsituation.

In einer weiteren vorteilhaften Ausgestaltung des ersten Aspekts umfasst die optische Anzeigevorrichtung ein Head-up-Display mit einem vorgegebenen Anzeigefeld. Die Vorrichtung ist ausgebildet, die Bildpunktwerte des grafischen Elements abhängig dem dreidimensionalen Modell derart zu ermitteln und auf dem vorgegebenen Anzeigefeld des Head-up-Displays zur Anzeige zu bringen, dass das grafische Element von einem Betrachter des Anzeigefelds aus einer vorgegebenen Betrachtungsposition heraus mit einem direkten Bezug zu der realen Umgebung des Fahrzeugs wahrgenommen wird. Eine Einbettung und/oder Überlagerung des grafischen Elements als virtuelle Information in eine von einem Fahrzeugnutzer wahrgenommene reale Umgebung ermöglicht, dass ein prädiktiver Charakter der Information, insbesondere der Fahrinformation und/oder Fahrzeuginformation, von dem Fahrzeugnutzer einfach, zuverlässig und leicht verständlich wahrgenommen werden kann.

In einer weiteren vorteilhaften Ausgestaltung des ersten Aspekts ist die Vorrichtung ausgebildet, die Bildpunktwerte für den zumindest einen Teil von Bildpunkten des digitalen Bildes zu ermitteln abhängig von weiteren Bildpunktwerten eines vorgegebnen Umfeldbildes. Dies ermöglicht vorteilhafterweise, beispielsweise für eine Anzeige auf einem LC-Display, das digitale Bild dem Umfeldbild überlagert anzuzeigen.

Die Erfindung zeichnet sich gemäß einem zweiten Aspekt aus durch ein Anzeigesystem für ein Fahrzeug. Das Anzeigesystem umfasst eine erste Steuereinheit, die ausgebildet ist, vorgegebene Datensätze bereitzustellen. Ferner umfasst das Anzeigesystem eine Vorrichtung zum Betreiben einer oder mehrerer Anzeigevorrichtungen gemäß dem ersten Aspekt und ein Fahrzeugkommunikationsnetzwerk, das die erste Steuereinheit und die Vorrichtung signaltechnisch koppelt für ein Senden der Datensätze von der ersten Steuereinheit an die Vorrichtung. Des Weiteren weist das Anzeigesystem eine oder mehrere optische Anzeigevorrichtungen auf, die jeweils signaltechnisch gekoppelt sind mit der Vorrichtung und die jeweils ausgebildet sind, ein von der Vorrichtung jeweils ermitteltes Signalisierungssignal zu empfangen und zu signalisieren.

Ergänzende vorteilhafte Ausgestaltungen des ersten Aspekts gelten hierbei auch für den zweiten Aspekt.

Die Bildgenerierung kann vorteilhafterweise in einer einzigen Verarbeitungseinheit im Fahrzeug, vorzugsweise in der Vorrichtung, erfolgen. Es ist nicht erforderlich, dass an verschiedenen Orten, das heißt in verschiedenen Verarbeitungseinheiten des Fahrzeugs, zum Beispiel in einer Head-Unit und in einem Kombi-Instrument, Bilder generiert werden, die dann anschließend in einer der beiden Verarbeitungseinheiten zusammengeführt werden. Es ist ausreichend, dass die für eine Bildsynthese, auch Rendering genannt, erforderlichen Daten nur der einen Verarbeitungseinheit, vorzugsweise der Vorrichtung, zur Verfügung gestellt werden. Die Bildgenerierung durch die Vorrichtung vereinfacht eine konsistente Bildgenerierung. Insbesondere bei einer aufwendigen dreidimensionalen Darstellung ist es möglich, schlüssige und hochwertige Anzeigeinhalte zu ermitteln. Bei einer Anzeige mit hohen Echtzeitanforderungen, insbesondere für eine kontaktanaloge Darstellung mit dem Head-up-Display, sind die Leistungsanforderungen an die Vorrichtung, die die Bildsynthese ausführt, sehr hoch. Die Bildgenerierung in der Vorrichtung für das kontaktanaloge Head-up-Display entlastet weitere Recheneinheiten, zum Beispiel den Prozessor in der Navigationseinheit, und ermöglicht eine fahrsituationsabhängige Anzeigenpriorisierung aller Inhalte im Head-up-Display in Echtzeit. Eine kontaktanaloge Anzeige, insbesondere in einem Head-up-Display, kann mit einer hohen Zuverlässigkeit und in Echtzeit generiert werden. Dadurch, dass die Bildgenerierung, insbesondere die Bildsynthese, zentral in der Vorrichtung ausgeführt werden kann, können Verzögerungszeiten und Bereitstellungslatenzzeiten einfach berücksichtigt werden.

Die Fahrinformationen und/oder Fahrzeuginformationen können von weiteren Einheiten des Fahrzeugs, zum Beispiel von dem Fahrerassistenzsystem und/oder der Navigationseinrichtung, und/oder fahrzeugexternen Einrichtungen bereitgestellt werden und an die erste Steuereinheit übermittelt werden. Die erste Steuereinheit kann ausgebildet sein, die Datensätze zu ermitteln abhängig von der vorgegebenen Fahrinformation und/oder Fahrzeuginformation, wobei die Datensätze eine vorgegebene Metadatenstruktur aufweisen können, die geeignet ist, die Fahrinformation und/oder Fahrzeuginformation textuell zu charakterisieren.

In einer vorteilhaften Ausgestaltung des zweiten Aspekts ist die eine oder sind die mehreren optischen Anzeigevorrichtungen signaltechnisch mit der Vorrichtung über eine vorgegebene Multimedia-Schnittstelle gekoppelt. Dies ermöglicht eine effiziente und zuverlässige Übertragung des ermittelten Signalisierungssignals.

Ausführungsbeispiele der Erfindung sind im Folgenden anhand der schematischen Zeichnungen erläutert.

Es zeigen:
- Figur 1: ein schematisches Blockschaltbild für ein Anzeigesystem eines Fahrzeugs,
- Figur 2: ein Head-up-Display für das Fahrzeug und
- Figur 3: ein Beispiel für eine kontaktanaloge Anzeige des Head-up-Displays.

Elemente gleicher Konstruktion oder Funktion sind figurenübergreifend mit den gleichen Bezugszeichen versehen.

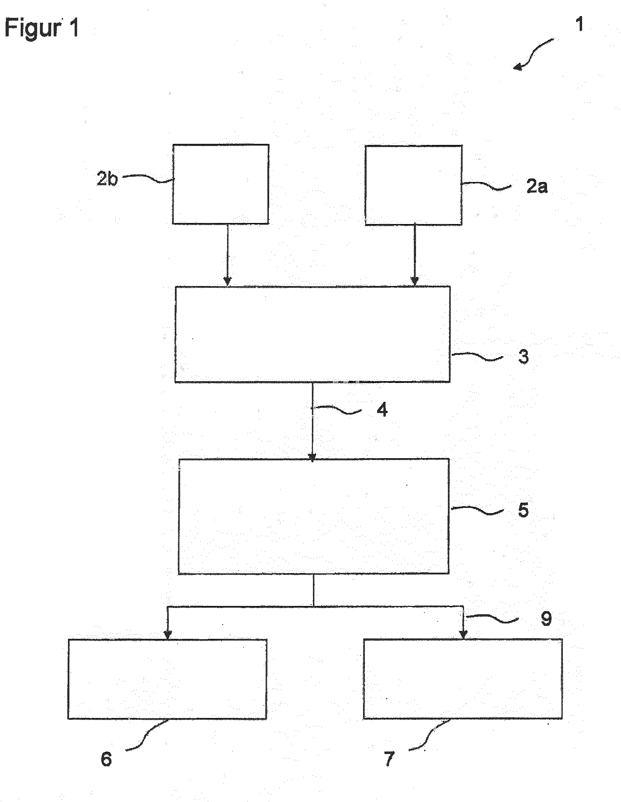

Figur 1 zeigt ein Ausführungsbeispiel eines Anzeigesystems 1 eines Fahrzeugs. Das Anzeigesystem 1 umfasst eine erste Steuereinheit 3 und eine Vorrichtung 5 zum Betreiben zumindest einer optischen Anzeigevorrichtung. Die zumindest eine optische Anzeigevorrichtung ist vorzugsweise in dem Fahrzeug angeordnet. In dem in Figur 1 gezeigten Ausführungsbeispiel weist das Anzeigesystem 1 beispielhaft eine erste Anzeigevorrichtung 6 und eine zweite Anzeigevorrichtung 7 auf.

Die erste Anzeigevorrichtung 6 umfasst beispielsweise einen Bildschirm. Der Bildschirm kann beispielsweise als Flüssigkristallanzeige, auch LC-Display genannt, ausgebildet sein. Die erste Anzeigeeinrichtung kann insbesondere in einer Kombi-Instrumententafel des Fahrzeugs angeordnet sein.

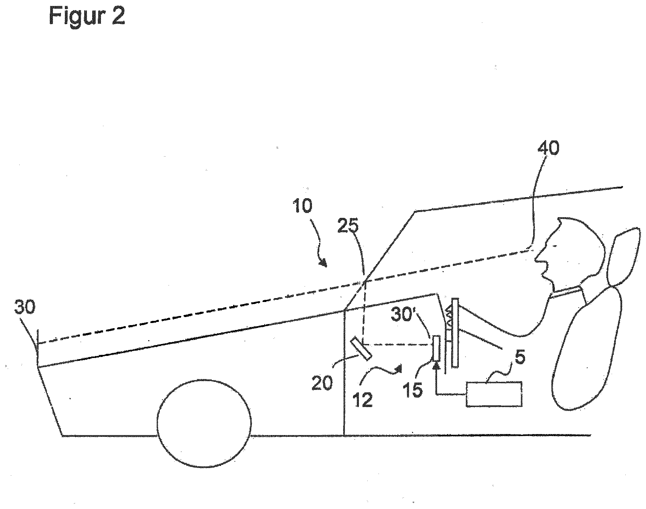

Die zweite Anzeigevorrichtung 7 umfasst beispielsweise ein Head-up-Display 10. Ein Ausführungsbeispiel des Head-up-Displays 10 ist im Detail in Figur 2 gezeigt.

Die in Figur 1 gezeigte erste Steuereinheit 3 umfasst beispielsweise eine zentrale Recheneinheit des Fahrzeugs, auch Head-Unit genannt. Die erste Steuereinheit 3 ist beispielsweise über ein vorgegebenes Fahrzeugkommunikationsnetzwerk 4 signaltechnisch mit der Vorrichtung 5 zum Betreiben der zumindest einen optischen Anzeigvorrichtung gekoppelt. Das Fahrzeugkommunikationsnetzwerk 4 kann zum Beispiel einen Fahrzeugbus umfassen. Alternativ ist auch möglich, dass das Fahrzeugkommunikationsnetzwerk 4 eine einzelne Leitungsverbindung umfasst. Alternativ oder zusätzlich ist möglich, dass das Fahrzeugkommunikationsnetzwerk 4 eine drahtlose Kommunikationsverbindung umfasst. Die erste Steuereinheit 3 ist beispielsweise ausgebildet, vorgegebene Datensätze über das Fahrzeugkommunikationsnetzwerk 4 an die Vorrichtung 5 zu senden und somit für die Vorrichtung 5 bereitzustellen.

Die Datensätze repräsentieren Fahrinformationen und/oder Fahrzeuginformationen, die geeignet sind, einem Fahrzeugnutzer grafisch und/oder bildhaft signalisiert zu werden.

Die Fahrzeuginformation und/oder Fahrinformation kann beispielsweise von einem Fahrerassistenzsystem und/oder von einer Navigationseinrichtung und/oder von einer fahrzeugexternen Einrichtung 2b ermittelt und/oder bereitgestellt werden. Die erste Steuereinheit 3 kann hierfür signaltechnisch gekoppelt sein mit einer oder mehreren weiteren Fahrzeugeinrichtungen 2a und/oder mit einer oder mehreren fahrzeugexternen Einrichtungen 2b. Beispielsweise kann die erste Steuereinheit 3 mit der einen oder den weiteren Fahrzeugeinrichtungen 2a über das Fahrzeugkommunikationsnetzwerk 4 signaltechnisch gekoppelt sein. Das Fahrzeugkommunikationsnetzwerk 4 kann unterschiedlichste Einrichtungen im Fahrzeug kommunikationstechnisch vernetzen. Das Fahrzeugkommunikationsnetzwerk 4 kann aufgeteilt sein in Sub-Systeme, die beispielsweise über Gateways gekoppelt sind.

Die Fahrinformationen können beispielsweise eine Fahranweisung umfassen und/oder eine aktuelle Verkehrssituation und/oder eine aktuelle Fahrsituation und/oder eine aktuelle Umfeldsituation, zum Beispiel eine aktuelle Außentemperatur, und so weiter. Die Fahrzeuginformation kann beispielsweise einen aktuellen Fahrzeugbetriebszustand, zum Beispiel eine Geschwindigkeit des Fahrzeugs, repräsentieren.

Die erste Steuereinheit 3 ist beispielsweise ausgebildet, die Datensätze bereitzustellen mit einer vorgegebenen Metadatenstruktur, die geeignet ist, die Fahrzeuginformationen und/oder Fahrinformationen textuell zu charakterisieren. Die Fahrzeuginformation und/oder Fahrinformation wird somit nicht in Form von Zeichenbefehlen oder als Picture-in-Picture-Inhalte, sondern in Form von Metadaten zur Verfügung gestellt. Beispielsweise wird also nicht ein Zeichenbefehl oder ein Videobild für einen Abbiegepfeil übertragen, sondern lediglich die Eigenschaftsinformationen einer Fahranweisung. Dies kann beispielsweise in der folgenden textuellen vorgegebenen Metadatenstruktur erfolgen:
<Aktion>; <Richtungselement>; <Distanz>

Zum Beispiel gemäß:
- "Abbiegen nach rechts in 200m"
- "Wechseln auf die rechte Fahrspur in 300 m"

Die Vorrichtung 5 ist über das Fahrzeugkommunikationsnetzwerk 4 signaltechnisch gekoppelt mit der ersten Steuereinheit 3 und ausgebildet, die von der ersten Steuereinheit 3 gesendeten Datensätze zu empfangen. Ferner ist die Vorrichtung 5 signaltechnisch gekoppelt mit der ersten 6 und der zweiten Anzeigevorrichtung 7.

Die Vorrichtung 5 ist ausgebildet, abhängig von den bereitgestellten Datensätzen und abhängig von einer vorgegebenen Latenzzeit ein dreidimensionales Modell für eine vorgegebene Umgebung des Fahrzeugs zu ermitteln. Ferner ist die Vorrichtung 5 ausgebildet, Bildpunktwerte für zumindest einen Teil von Bildpunkten eines digitalen Bildes und/oder eines grafischen Elements 8 zu ermitteln abhängig von dem dreidimensionalen Modell und ein Signalisierungssignal zu ermitteln zum Signalisieren der Bildpunktwerte der Bildpunkte mittels der jeweiligen optischen Anzeigevorrichtung, wobei die vorgegebene Latenzzeit zumindest einen Teil einer Bereitstellungszeitdauer repräsentiert, die eine zeitliche Dauer umfasst, von einem Beginn eines Erfassens der Fahrzeuginformationen und/oder Fahrinformationen bis zur Signalisierung des Signalisierungssignals mittels der jeweiligen optischen Anzeigevorrichtung.

Die vorgegebene Latenzzeit kann Verzögerungszeiten und Bereitstellungslatenzzeiten umfassen. Die Verzögerungszeiten können hierbei jeweils eine Zeitdauer repräsentieren, bis die ermittelten Bilddaten zu den Anzeigensenken gelangen. Die Bereitstellungslatenzzeiten können jeweils eine Zeitdauer repräsentieren, die jeweils erforderlich ist für ein Bereitstellen verschiedener Daten aus unterschiedlichen Einheiten, die für die jeweilige Bildgenerierung genutzt werden.

Die Vorrichtung 5 ist ferner beispielsweise ausgebildet, abhängig von vorgegebenen Streckendaten und/oder vorgegebenen Umfelddaten das dreidimensionale Modell für die vorgegebene Umgebung des Fahrzeugs zu ermitteln. Die Streckendaten und/oder Umfelddaten können beispielsweise von der ersten Steuereinheit 3 und/oder einer oder mehreren weiteren Fahrzeugeinrichtungen 2a erfasst werden. Die erste Steuereinheit 3 und/oder die weiteren Fahrzeugeinrichtungen 2a sind hierzu beispielsweise jeweils mit einer oder mehreren Sensoreinheiten signaltechnisch gekoppelt. Die jeweiligen Sensoreinheiten sind ausgebildet, Umfelddaten des Fahrzeugs zu ermitteln. Die jeweilige Sensoreinheit kann eine optische Erfassungseinrichtung aufweisen, zum Beispiel eine Videokamera, und/oder einen Radarsensor und/oder einen Ultraschallsensor und/oder ein Lidarsensor. Die Streckendaten können beispielsweise von der Navigationseinrichtung bereitgestellt werden. Die vorgegebenen Streckendaten und/oder vorgegebenen Umfelddaten werden beispielsweise ebenfalls von der ersten Steuereinheit 3 für die Vorrichtung 5 bereitgestellt. Die Streckendaten und/oder Umfelddaten können beispielsweise ebenfalls als Metadaten bereitgestellt werden, die die vorgegebene Metadatenstruktur aufweisen, die eine textuelle Charakterisierung der Streckendaten und/oder Umfelddaten ermöglicht. Die erste Steuereinheit 3 kann hierzu beispielsweise ausgebildet sein, die Datensätze, die Streckendaten und/oder Umfelddaten repräsentieren, zu ermitteln abhängig von den erfassten Streckendaten beziehungsweise Umfelddaten.

Die Vorrichtung 5 kann des Weiteren ausgebildet sein, abhängig von den erfassten Umfelddaten Umfeldmodelldaten zu ermitteln, die eine vorgegebene Umgebung des Fahrzeugs repräsentieren.

Die Vorrichtung 5 ist beispielsweise ausgebildet, abhängig von den Umfeldmodelldaten, eine dreidimensionale Szene zu ermitteln, die ein virtuelles räumliches Modell repräsentiert. Das virtuelle räumliche Modell definiert beispielsweise Objekte und deren Materialeigenschaften, Lichtquellen, sowie die Position und Blickrichtung eines Betrachters.

Die Vorrichtung 5 umfasst beispielsweise ferner eine Bildsyntheseeinheit, auch Rendering Unit genannt, die ausgebildet ist, von einem virtuellen Betrachter aus sichtbare Objekte zu ermitteln, ein Aussehen von Oberflächen, beeinflusst durch deren Materialeigenschaften, zu ermitteln und eine Lichtverteilung innerhalb der Szene zu berechnen.

Das von der Vorrichtung 5 ermittelte Signalisierungssignal wird beispielsweise an die erste 6 und/oder an die zweite Anzeigevorrichtung 7 gesendet. Die Vorrichtung 5 ist hierzu beispielsweise über eine vorgegebene Multimedia-Schnittstelle 9 gekoppelt mit der ersten 6 und/oder der zweiten Anzeigevorrichtung 7. Die Multimedia-Schnittstelle 9 kann beispielsweise ein High Definition Multimedia Interface umfassen.

Die Vorrichtung 5 ist zum Beispiel ausgebildet, abhängig von einer jeweiligen Ausbildung der optischen Anzeigevorrichtung das dreidimensionale Modell und/oder die Bildpunktwerte und/oder das Signalisierungssignal zu ermitteln, so dass eine aufwendige dreidimensionale Darstellung mittels der jeweiligen optischen Anzeigevorrichtung zuverlässig und mit hoher Qualität möglich ist.

Die Vorrichtung 5 ist beispielsweise ausgebildet, für die Signalisierung einer gewünschten Fahrinformation und/oder Fahrzeuginformation mittels des Head-up-Displays 10, die Bildpunktwerte des grafischen Elements 8 abhängig dem dreidimensionalen Modell derart zu ermitteln und auf einem vorgegebenen Anzeigefeld 11 des Head-up-Displays 10 zur Anzeige zu bringen, dass das grafische Element 8 von einem Betrachter des Anzeigefelds 11 aus einer vorgegebenen Betrachtungsposition heraus mit einem direkten Bezug zu der realen Umgebung des Fahrzeugs wahrgenommen wird.

Die Vorrichtung 5 kann beispielsweise ferner ausgebildet sein, für die Signalisierung der gewünschten Fahrinformation und/oder Fahrzeuginformation mittels des LC-Displays des Kombi-Instruments, die Bildpunktwerte für den zumindest einen Teil von Bildpunkten des digitalen Bildes zu ermitteln abhängig von weiteren Bildpunktwerten eines vorgegebenen Umfeldbildes, so dass das digitale Bild dem Umfeldbild überlagert angezeigt werden kann auf dem LC-Display des Kombi-Instruments. Das Umfeldbild kann beispielsweise mittels einer optischen Erfassungseinrichtung, zum Beispiel mit einer Videokamera, erfasst werden.

Ferner kann die Vorrichtung 5 ausgebildet sein, abhängig von einer aktuellen Anzeigesituation einer der optischen Anzeigevorrichtungen, zum Beispiel abhängig von einer Anzeigedichte in dem Anzeigefeld 11 des Head-up-Displays 10, das dreidimensionale Modell und/oder die Bildpunktwerte und/oder das Signalisierungssignal zu ermitteln für die zweite Anzeigevorrichtung 7, also zum Beispiel für das Head-up-Display oder für die erste Anzeigevorrichtung 6, zum Beispiel für das LC-Display der Kombi-Instrumententafel.

Des Weiteren kann vorgesehen sein, dass der jeweiligen Fahrinformation und/oder Fahrzeuginformation eine vorgegebene Priorität zugeordnet und die Vorrichtung 5 ausgebildet ist, abhängig von der Priorität das dreidimensionale Modell und/oder die Bildpunktwerte und/oder das Signalisierungssignal zu ermitteln für die eine optische Anzeigevorrichtung, zum Beispiel für die zweite Anzeigevorrichtung 7 oder für die weitere optische Anzeigevorrichtung, zum Beispiel für die erste Anzeigevorrichtung 6. Dies kann beispielsweise vorteilhaft genutzt werden, für eine Anzeigenpriorisierung der jeweiligen Fahrinformation und/oder Fahrzeuginformation innerhalb des Head-up-Displays 10 und für eine Anzeigenpriorisierung zwischen dem Head-up-Display 10 und dem LC-Display der Kombi-Instrumententafel. Die Priorität der jeweiligen Fahrinformation und/oder Fahrzeuginformation kann hierbei beispielsweise abhängig von einer aktuell ermittelten Verkehrssituation und/oder Fahrsituation des Fahrzeugs ermittelt werden.

Figur 2 zeigt ein Ausführungsbeispiel eines Head-up-Displays 10.

Das Head-up-Display 10 umfasst eine Bilderzeugungseinrichtung 12 zur Erzeugung eines virtuellen Bildes 30. Die Bilderzeugungseinrichtung 12 umfasst ein Display 15 zur Erzeugung eines realen Bildes 30' und ein optisches System zur Erzeugung des virtuellen Bildes 30. Das optische System umfasst einen abbildenden ersten 20 und zweiten Spiegel 25. Ein von dem Display 15 erzeugtes reales Bild 30' wird zunächst auf den ersten Spiegel 20 gelenkt und von dem ersten Spiegel 20 auf den zweiten Spiegel 25 projiziert. Der zweite Spiegel 25 kann als eine Windschutzscheibe 32 eines Fahrzeugs 1 ausgebildet sein.

Aus einer vorgegebenen Eyebox 40 eines Fahrers erscheint in einem Abstand vor der Windschutzscheibe 32, beispielsweise am Ende der Motorhaube, das virtuelle Bild 30. Das virtuelle Bild 30 kann im Allgemeinen nur aus einem definierten Bereich, der so genannten Eyebox 40, gesehen werden. Die Eyebox 40 wird üblicherweise so ausgelegt, dass aus dem gesamten gewünschten Eyeboxbereich das komplette virtuelle Bild 30 gesehen werden kann.

In dem virtuellen Bild 30 können statische Anzeigeinhalte, die dauerhaft oder häufig angezeigt werden, dargestellt werden. Des Weiteren kann die Bilderzeugungseinrichtung 12 dazu ausgebildet sein, dass in dem virtuellen Bild 30 Bildinhalte angezeigt werden, die nur situativ und kurzzeitig angezeigt werden. Das Head-up-Display 10 kann insbesondere als kontaktanaloges Head-up-Display 10 ausgebildet sein. Bei Head-up-Displays 10 wird zwischen kontaktanaloger und nichtkontaktanaloger Darstellung unterschieden. Kontaktanaloge Darstellungsformen reichern die vom Fahrer wahrgenommene Umwelt durch Überlagerung einer künstlich erzeugten Szenerie an. Nichtkontaktanaloge Darstellungsformen stellen dagegen Informationen ohne direkten Bezug zur Umwelt dar.

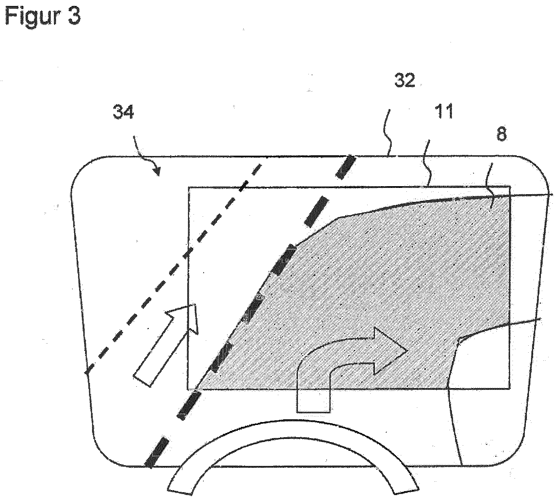

Figur 3 zeigt beispielhaft das vorgegebene Anzeigefeld 11 auf einer Windschutzscheibe 32 des Fahrzeugs. Auf dem Anzeigefeld 11 wird das grafische Element 8 angezeigt. In dem in Figur 3 gezeigten Beispiel wird das grafische Element 8 derart angezeigt, dass der Betrachter die reale Fahrbahn vor dem Fahrzeug farblich markiert wahrnimmt, das grafische Element 8 wird somit von einem Betrachter des Anzeigefelds 11 mit einem direkten Bezug zu der realen Umgebung 34 des Fahrzeugs wahrgenommen. Da die Bildgenerierung, insbesondere die Bildsynthese, zentral in der Vorrichtung 5 ausgeführt werden, können Verzögerungszeiten und Bereitstellungslatenzzeiten einfach berücksichtigt werden und die Bildgenerierung ist in Echtzeit möglich, so dass die kontaktanaloge Darstellung mit hoher Zuverlässigkeit und hoher Qualität erfolgen kann.

### Bezugszeichenliste

- 1: Anzeigesystem
- 2a: weitere Fahrzeugeinrichtung
- 2b: fahrzeugexterne Einrichtung
- 3: erste Steuereinheit
- 4: Fahrzeugkommunikationsnetzwerk
- 5: Vorrichtung
- 6: erste Anzeigevorrichtung
- 7: zweite Anzeigevorrichtung
- 8: grafisches Element
- 9: Multimedia-Schnittstelle
- 10: Head-up-Display
- 11: Anzeigefeld
- 12: Bilderzeugungseinrichtung
- 15: Display
- 20: erster Spiegel
- 25: zweiter Spiegel
- 30: virtuelles Bild
- 30': reales Bild
- 32: Windschutzscheibe
- 34: reale Umgebung des Fahrzeugs

## Patentansprüche

1. Vorrichtung (5) zum Betreiben mehrerer optischer Anzeigevorrichtungen eines Fahrzeugs, die ausgebildet ist
- abhängig von bereitgestellten Datensätzen und abhängig von einer vorgegebenen Latenzzeit ein dreidimensionales Modell für eine vorgegebene Umgebung des Fahrzeugs zu ermitteln, wobei die Datensätze vorgegebene Fahrzeuginformationen und/oder Fahrinformationen repräsentieren, die geeignet sind, einem Fahrzeugnutzer grafisch und/oder bildhaft signalisiert zu werden,
- Bildpunktwerte für zumindest einen Teil von Bildpunkten eines digitalen Bildes und/oder eines grafischen Elements (8) zu ermitteln abhängig von dem dreidimensionalen Modell und
- ein Signalisierungssignal zu ermitteln zum Signalisieren der Bildpunktwerte der Bildpunkte mittels der jeweiligen optischen Anzeigevorrichtung, wobei
- die vorgegebene Latenzzeit eine Bereitstellungszeitdauer oder einen Teil der Bereitstellungszeitdauer repräsentiert, die eine zeitliche Dauer umfasst von einem Beginn eines Erfassens der Fahrzeuginformationen und/oder Fahrinformationen bis zur Signalisierung des Signalisierungssignals mittels der jeweiligen optischen Anzeigevorrichtung,
- die Vorrichtung (5) ferner ausgebildet ist, das dreidimensionale Modell und/oder die Bildpunktwerte und/oder das Signalisierungssignal zu ermitteln abhängig von einer jeweiligen Ausbildung der optischen Anzeigevorrichtung,
- die Vorrichtung (5) ferner ausgebildet ist, abhängig von einer aktuellen Anzeigesituation einer der optischen Anzeigevorrichtung der mehreren Anzeigevorrichtungen das dreidimensionale Modell und/oder die Bildpunktwerte und/oder das Signalisierungssignal zu ermitteln für die eine optische Anzeigevorrichtung oder für eine weitere optische Anzeigevorrichtung, wobei, falls die aktuelle Anzeigesituation der einen ersten optischen Anzeigevorrichtung die gewünschte Anzeige nicht zulässt, die bestimmte Information in geeigneter Weise mittels der weiteren optischen Anzeigevorrichtung signalisiert wird, und/oder
- bei der der jeweiligen Fahrinformation und/oder Fahrzeuginformation eine vorgegebene Priorität zugeordnet ist und die Vorrichtung (5) ausgebildet ist, abhängig von der Priorität das dreidimensionale Modell und/oder die Bildpunktwerte und/oder das Signalisierungssignal entsprechend zu ermitteln für die erste optische Anzeigevorrichtung oder für die zweite optische Anzeigevorrichtung.

2. Vorrichtung (5) nach Anspruch 1,
bei der die Vorrichtung (5) signaltechnisch koppelbar ist mit einem vorgegebenen Fahrzeugkommunikationsnetzwerk (4) und die Vorrichtung (5) ausgebildet ist, die Datensätze über das Fahrzeugkommunikationsnetzwerk (4) zu empfangen.

3. Vorrichtung (5) nach Anspruch 1 oder 2,
bei der die Datensätze eine vorgegebene Metadatenstruktur aufweisen, die geeignet ist, die Fahrzeuginformationen und/oder Fahrinformationen textuell zu charakterisieren.

4. Vorrichtung (5) nach einem der vorstehenden Ansprüche,
bei dem die Priorität der jeweiligen Fahrinformation und/oder Fahrzeuginformation abhängig von einer aktuell ermittelten Verkehrssituation und/oder Fahrsituation des Fahrzeugs ermittelt wird.

5. Vorrichtung (5) nach einem der vorstehenden Ansprüche,
bei der die erste optische Anzeigevorrichtung ein Head-up-Display (10) mit einem vorgegebenen Anzeigefeld (11) umfasst und die Vorrichtung (5) ausgebildet ist, die Bildpunktwerte des grafischen Elements (8) abhängig von dem dreidimensionalen Modell derart zu ermitteln und auf dem vorgegebenen Anzeigefeld (11) des Head-up-Displays (10) zur Anzeige zu bringen, dass das grafische Element (8) von einem Betrachter des Anzeigefelds (11) aus einer vorgegebenen Betrachtungsposition heraus mit einem direkten Bezug zu der realen Umgebung des Fahrzeugs wahrgenommen wird.

6. Vorrichtung (5) nach einem der vorstehenden Ansprüche,
die ausgebildet ist, die Bildpunktwerte für den zumindest einen Teil von Bildpunkten des digitalen Bildes zu ermitteln abhängig von weiteren Bildpunktwerten eines vorgegebenen Umfeldbildes.

7. Anzeigesystem (1) für ein Fahrzeug aufweisend:
- eine erste Steuereinheit (3), die ausgebildet ist, vorgegebene Datensätze bereitzustellen,
- eine Vorrichtung (5) gemäß einem der Ansprüche 1 bis 6,
- ein Fahrzeugkommunikationsnetzwerk (4), das die erste Steuereinheit (3) und die Vorrichtung (5) signaltechnisch koppelt für ein Senden der Datensätze von der ersten Steuereinheit (3) zu der Vorrichtung (5), und
- mehrere optische Anzeigevorrichtungen, die jeweils signaltechnisch gekoppelt sind mit der Vorrichtung (5) und die jeweils ausgebildet sind, ein von der Vorrichtung (5) jeweils ermitteltes Signalisierungssignal zu empfangen und zu signalisieren.

8. Anzeigesystem (1) nach Anspruch 7,
bei dem die mehreren optischen Anzeigevorrichtungen signaltechnisch mit der Vorrichtung (5) über eine vorgegebene Multimedia-Schnittstelle (9) gekoppelt sind.

## Claims

1. A device (5) for operating a plurality of optical display devices of a vehicle, which device is configured
- to determine a three-dimensional model for a predefined environment of the vehicle depending on data sets provided and depending on a predefined latency time, wherein the data sets represent predefined vehicle information and/or driving information suitable for being signalled graphically and/or pictorially to a vehicle user,
- to determine pixel values for at least one portion of the pixels of a digital image and/or of a graphical element (8) depending on the three-dimensional model, and
- to determine a signalling signal for signalling the pixel values of the pixels by means of a particular optical display device, wherein the predefined latency time represents a provision time duration or at least a portion of the provision time duration comprising a temporal duration from a beginning of an acquisition of the vehicle information and/or driving information until the signalling of the signalling signal by means of the particular optical display device,
- the device (5) is further configured to determine the three-dimensional model and/or the pixel values and/or the signalling signal depending on the particular design of the optical display device,
- the device (5), depending on a current display situation of one of the optical display devices of the plurality of display devices, is further configured to determine the three-dimensional model and/or the pixel values and/or the signalling signal for the one optical display device or for a further optical display device, wherein if the current display situation of the one first optical display device does not permit the desired display, the determined information is signalled in a suitable manner by means of the further optical display device, and/or
- wherein the particular driving information and/or vehicle information is assigned a predefined priority, and the device (5) is configured to determine accordingly the three-dimensional model and/or the pixel values and/or the signalling signal for the first optical display device or for the second optical display device depending on the priority.

2. A device (5) according to claim 1,
wherein the device (5) can be coupled by means of signals to a predefined vehicle communications network (4) and the device (5) is configured to receive the data sets via the vehicle communications network (4).

3. A device (5) according to claim 1 or 2,
wherein the data sets have a predefined metadata structure which is suitable for characterising the vehicle information and/or driving information in text form.

4. A device (5) according to any one of the preceding claims, wherein the priority of the particular driving information and/or vehicle information is determined depending on a currently determined traffic situation and/or driving situation of the vehicle.

5. A device (5) according to any one of the preceding claims, in which the first optical display device comprises a head-up display (10) having a predefined display field (11), and the device (5) is configured to determine the pixel values of the graphical element (8) and to display them on the predefined display field (11) of the head-up display (10) depending on the three-dimensional model in such a way that the graphical element (8) is perceived by an observer of the display field (11) from a predefined viewing position with direct reference to the real environment of the vehicle.

6. A device (5) according to any one of the preceding claims, which device is configured to determine the pixel values for the at least one portion of the pixels of the digital image depending on further pixel values of a predefined environment image.

7. A display system (1) for a vehicle comprising:
- a first control unit (3), which is configured to provide predefined data sets,
- a device (5) according to any one of claims 1 to 6,
- a vehicle communications network (4), which couples the first control unit (3) and the device (5) by means of signals for transmitting the data sets from the first control unit (3) to the device (5), and
- a plurality of optical display devices, which are each coupled to the device (5) by means of signals and which are each designed to receive and signal a signalling signal determined by the device (5) in each case.

8. A display system (1) according to claim 7,
in which the plurality of optical display devices are coupled by means of signals to the device (5) via a predefined multimedia interface (9).

## Revendications

1. Dispositif (5) permettant de faire fonctionner plusieurs dispositifs d'affichage optique d'un véhicule, qui est réalisé pour permettre :
- en fonction de jeux de données fournis et en fonction d'un temps de latence prédéfini de déterminer un modèle tridimensionnel d'un environnement prédéfini du véhicule, le jeu de données représentant des informations prédéfinies du véhicule et/ou des informations de conduite qui sont adaptées pour être signalées à un utilisateur du véhicule de façon graphique et/ou picturale,
- de déterminer des valeurs de points d'image pour au moins une partie de points d'image d'une image numérique et/ou d'un élément graphique (8) en fonction du modèle tridimensionnel, et
- de déterminer un signal de signalisation pour signaler les valeurs des points d'image, au moyen du dispositif d'affichage optique respectif,
- le temps de latence prédéfini représentant un délai de livraison ou une partie du délai de livraison comportant la durée entre le début de la détection, des informations du véhicule et/ou des informations de conduite et la signalisation du signal de signalisation au moyen du dispositif d'affichage optique respectif,
- le dispositif (5) étant en outre réalisé pour permettre de déterminer le modèle tridimensionnel et/ou les valeurs de points d'image et/ou le signal de signalisation en réalisation de la réalisation respective du dispositif d'affichage optique,
- le dispositif (5) étant en outre réalisé pour permettre de déterminer en fonction de la situation d'affichage actuelle de l'un des dispositifs d'affichage optique parmi l'ensemble de dispositifs d'affichage optique le modèle tridimensionnel et/ou les valeurs des points d'image et/ou le signal de signalisation pour ce dispositif d'affichage optique ou pour un autre dispositif d'affichage optique, et, lorsque la situation d'affichage actuelle du premier dispositif d'affichage optique ne permet pas l'affichage souhaité, l'information déterminée est signalée de la manière adaptée au moyen de l'autre dispositif d'affichage optique, et/ou
- dans lequel à l'information de conduite respective et/ou à l'information du véhicule est attribuée une priorité prédéfinie, et le dispositif (5) est réalisé pour permettre de déterminer en conséquence, en fonction de la priorité le modèle tridimensionnel, et/ou les valeurs de points d'image et/ou le signal de signalisation pour le premier dispositif d'affichage optique ou pour le second dispositif d'affichage optique.

2. Dispositif (5) conforme à la revendication 1,
pouvant être couplé par la technique des signaux avec un réseau de communication du véhicule (4) prédéfini et qui est réalisé pour permettre de recevoir le jeu de données par l'intermédiaire du réseau de communication du véhicule (4).

3. Dispositif (5) conforme à la revendication 1 ou 2,
dans lequel les jeux de données comporte une structure de métadonnées prédéfinie qui est adaptée pour caractériser les informations du véhicule et/ou les informations de conduite de façon textuelle.

4. Dispositif (5) conforme à l'une des revendications précédentes, dans lequel la priorité de l'information de conduite et/ou de l'information du véhicule respective est déterminée en fonction de la situation de trafic et/ou de la situation de conduite du véhicule actuellement déterminée.

5. Dispositif (5) conforme l'une des revendications précédentes,
dans lequel le premier dispositif d'affichage optique est un affichage tête haute (10) ayant un champ d'affichage (11) prédéfini, et le dispositif (5) est réalisé pour permettre de déterminer les valeurs des points d'image de l'élément graphique (8) en fonction du modèle tridimensionnel et de les afficher sur le champ d'affichage (11) prédéfini de l'affichage tête haute (10) pour que l'élément graphique (8) puisse être perçu par un observateur du champ d'affichage (11) à partir d'une position d'observation prédéfinie avec un rapport direct avec l'environnement réel du véhicule.

6. Dispositif (5) conforme à l'une des revendications précédentes,
qui est réalisé pour permettre de déterminer les valeurs de points d'image pour au moins une partie des points d'image, de l'image numérique en fonction d'autres valeurs de points d'image, d'une image d'environnement prédéfinie.

7. Système d'affichage (1) destiné à un véhicule comprenant :
- une première unité de commande (3) qui est réalisée pour permettre de fournir des jeux de données prédéfinis,
- un dispositif (5) conforme à l'une des revendications 1 à 6,
- un réseau de communication du véhicule (4) qui couple par la technique des signaux la première unité de commande (3) et le dispositif (5) pour permettre une transmission des jeux de données de la première unité de commande (3) au dispositif (5), et
- plusieurs dispositifs d'affichage optique qui sont respectivement couplés par la technique des signaux avec le dispositif (5) et sont respectivement réalisés pour permettre de recevoir et de signaler un signal de signalisation respectivement déterminé par le dispositif (5).

8. Système d'affichage (1) conforme à la revendication 7,
dans lequel les dispositifs d'affichage optique sont couplés par la technique des signaux avec le dispositif (5) par l'intermédiaire d'une interface multimédia (9) prédéfinie.
